# EUROPÄISCHE PATENTANMELDUNG

(11) **EP 3 043 467 A1**
(43) Veröffentlichungstag der Anmeldung: **13.07.2016**
(21) Anmeldenummer: 15150780.3
(22) Anmeldetag: 12.01.2015
(51) Int. Cl.: H02P 27/06, H02P 23/02

(54) **Regelung einer Antriebsvorrichtung**

(71) Anmelder: Siemens Aktiengesellschaft, 80333 München (DE)
(72) Erfinder: Tsoumas, Ioannis, 90402 Nürnberg (DE)

(57) **Zusammenfassung**

Die Erfindung betrifft ein Verfahren und eine Regelungsvorrichtung (13) zur Regelung einer Antriebsvorrichtung (1), die einen Elektromotor (5) mit einer Motorwelle (7) und einen Umrichter (11) zur Energieversorgung des Elektromotors (5) aufweist. Dabei werden Messwerte von Messgrößen, die eine Verlustleistung der Antriebsvorrichtung (1) charakterisieren, erfasst und eine Umrichterausgangsspannung wird in Abhängigkeit von den erfassten Messwerten derart geregelt, dass die Verlustleistung abnimmt.

## Beschreibung

Die Erfindung betrifft ein Verfahren und eine Regelungsvorrichtung zur Regelung einer Antriebsvorrichtung, die einen Elektromotor mit einer Motorwelle und einen Umrichter zur Energieversorgung des Elektromotors aufweist.

Die Verwendung drehzahlveränderbarer Antriebsvorrichtungen in der Industrie kann zu einer deutlichen Steigerung einer Prozesseffizienz und damit zur Reduzierung von Produktions- und Produktkosten führen. Die Prozesseffizienz kann dabei mit Hilfe einer optimierten Regelung der Antriebsvorrichtungen weiter gesteigert werden.

Der Erfindung liegt die Aufgabe zugrunde, ein verbessertes Verfahren und eine verbesserte Regelungsvorrichtung zur Regelung einer Antriebsvorrichtung anzugeben.

Die Aufgabe wird erfindungsgemäß hinsichtlich des Verfahrens durch die Merkmale des Anspruchs 1 und hinsichtlich der Regelungsvorrichtung durch die Merkmale des Anspruchs 12 gelöst.

Vorteilhafte Ausgestaltungen der Erfindung sind Gegenstand der Unteransprüche.

Das erfindungsgemäße Verfahren dient der Regelung einer Antriebsvorrichtung, die einen Elektromotor mit einer Motorwelle und einen Umrichter zur Energieversorgung des Elektromotors aufweist. Dabei werden Messwerte von Messgrößen, die eine Verlustleistung der Antriebsvorrichtung charakterisieren, erfasst, und es wird eine Umrichterausgangsspannung des Umrichters in Abhängigkeit von den erfassten Messwerten derart geregelt, dass die Verlustleistung abnimmt.

Das Verfahren ermöglicht vorteilhaft eine Steigerung der Effizienz einer umrichtergespeisten Antriebsvorrichtung durch eine Reduzierung einer Verlustleistung der Antriebsvorrichtung. Dies wird durch eine Regelung der Umrichterausgangsspannung in Abhängigkeit von Messwerten von Messgrößen, die die Verlustleistung charakterisieren, erreicht.

Als Messgrößen werden dabei vorzugsweise eine Motordrehzahl der Motorwelle und/oder ein Ausgangsstrom des Umrichters und/oder eine Eingangsspannung des Umrichters und/oder ein Eingangsstrom des Umrichters verwendet. Im Falle, dass der Umrichter einen Gleichrichter und einen mit dem Gleichrichter über einen Zwischenkreis verbundenen Wechselrichter aufweist, wird als eine Messgröße ferner vorzugsweise eine Zwischenkreisspannung des Zwischenkreises verwendet.

Diese Messgrößen ermöglichen vorteilhaft die Ermittlung der Verlustleistung der Antriebsvorrichtung als Differenz einer elektrischen Eingangsleistung an einem Eingang des Umrichters und einer mechanischen Motorleistung des Motors durch Messung oder Berechnung der Eingangsleistung und/oder Motorleistung. Beispielsweise können die Motorleistung aus der Motordrehzahl der Motorwelle und dem Ausgangsstrom des Umrichters und die Eingangsleistung aus der Eingangsspannung und dem Eingangsstrom des Umrichters ermittelt werden.

Zur Regelung der Umrichterausgangsspannung wird vorzugsweise in aufeinander folgenden Regelungszeitintervallen jeweils ein Ausgangsspannungssollwert der Umrichterausgangsspannung in Abhängigkeit von den erfassten Messwerten ermittelt und die Umrichterausgangsspannung wird auf den ermittelten Ausgangsspannungssollwert geregelt.

Dadurch kann die Umrichterausgangsspannung vorteilhaft laufend den jeweils erfassten Messwerten angepasst werden, sodass die Verlustleistung der Antriebsvorrichtung laufend optimiert werden kann.

Dabei wird der Ausgangsspannungssollwert vorzugsweise
- entweder einer Lookup-Tabelle für den Ausgangsspannungssollwert in Abhängigkeit von Werten der Messgrößen entnommen
- oder mittels eines mathematischen Modells zur Berechnung des Ausgangsspannungssollwerts in Abhängigkeit von Werten der Messgrößen berechnet
- oder in Abhängigkeit von den erfassten Messwerten schrittweise geändert, wobei in jedem Regelungszeitintervall Messwerte erfasst werden und aus den jeweils erfassten Messwerten eine Verlustleistung ermittelt wird und eine Änderungsrichtung der Änderung des Ausgangsspannungssollwerts gegenüber der Änderungsrichtung in dem vorhergehenden Regelungszeitintervall geändert wird, falls die ermittelte Verlustleistung gegenüber einer in dem vorhergehenden Regelungszeitintervall ermittelten Verlustleistung zunimmt, und beibehalten wird, falls die ermittelte Verlustleistung gegenüber einer in dem vorhergehenden Regelungszeitintervall ermittelten Verlustleistung abnimmt.

Unter einer Änderungsrichtung der Änderung des Ausgangsspannungssollwerts wird dabei eine Änderung des Ausgangsspannungssollwerts zu kleineren oder größeren Werten hin verstanden.

Jeder dieser Alternativen ermöglicht eine laufende Aktualisierung des Ausgangsspannungssollwerts in Abhängigkeit von den erfassten Messwerten der Messgrößen. Die Verwendung einer Lookup-Tabelle hat den Vorteil, besonders wenig Rechenaufwand zu erfordern und dadurch besonders schnell und einfach realisierbar zu sein, erfordert jedoch das Anlegen einer Lookup-Tabelle und ist daher gegenüber Systemveränderungen, z.B. durch Komponentenwechsel oder Verschleiß, wenig flexibel. Die Verwendung eines mathematischen Modells zur Berechnung des Ausgangsspannungssollwerts ist demgegenüber flexibler, erfordert jedoch mehr Rechenzeit und -aufwand sowie Parameter des mathematischen Modells, deren Werte nicht immer einfach zu bestimmen sind. Die Verwendung einer schrittweisen Änderung des Ausgangsspannungssollwerts in Abhängigkeit von den erfassten Messwerten der Messgrößen gemäß der dritten oben genannten Alternative ist einerseits gegenüber Systemveränderungen flexibel, da sie nicht von den konkreten Komponenten des Systems abhängt, und außerdem mit relativ wenig Rechenaufwand realisierbar, so dass sie Vorteile der beiden anderen Alternativen kombiniert.

Weitere Ausgestaltungen der Erfindung richten sich auf eine Antriebsvorrichtung, deren Umrichter einen Gleichrichter und einen mit dem Gleichrichter über einen Zwischenkreis verbundenen Wechselrichter aufweist, wobei eine Zwischenkreisspannung des Zwischenkreises mittels des Gleichrichters geregelt wird. Dabei wird erfindungsgemäß zusätzlich zur Umrichterausgangsspannung auch die Zwischenkreisspannung in Abhängigkeit von den erfassten Messwerten derart geregelt, dass die Verlustleistung abnimmt.

Dies ermöglicht vorteilhaft eine noch effizientere Reduzierung der Verlustleistung der Antriebsvorrichtung durch eine gleichzeitige Regelung der Umrichterausgangsspannung und der Zwischenkreisspannung.

Analog zu den oben bereits genannten Ausgestaltungen der Regelung der Umrichterausgangsspannung wird vorzugsweise in aufeinander folgenden Regelungszeitintervallen jeweils ein Zwischenkreisspannungssollwert der Zwischenkreisspannung in Abhängigkeit von den erfassten Messwerten ermittelt und die Zwischenkreisspannung auf den ermittelten Zwischenkreisspannungssollwert geregelt.

Dabei wird der Zwischenkreisspannungssollwert vorzugsweise
- entweder einer Lookup-Tabelle für den Zwischenkreisspannungssollwert in Abhängigkeit von Werten der Messgrößen entnommen
- oder mittels eines mathematischen Modells zur Berechnung des Zwischenkreisspannungssollwerts in Abhängigkeit von Werten der Messgrößen berechnet
- oder in Abhängigkeit von den erfassten Messwerten schrittweise geändert, wobei in jedem Regelungszeitintervall Messwerte erfasst und aus den jeweils erfassten Messwerten eine Verlustleistung ermittelt wird und eine Änderungsrichtung der Änderung des Zwischenkreisspannungssollwerts gegenüber der Änderungsrichtung in dem vorhergehenden Regelungszeitintervall geändert wird, falls die ermittelte Verlustleistung gegenüber einer in dem vorhergehenden Regelungszeitintervall ermittelten Verlustleistung zunimmt, und beibehalten wird, falls die ermittelte Verlustleistung gegenüber einer in dem vorhergehenden Regelungszeitintervall ermittelten Verlustleistung abnimmt.

Diese Ausgestaltungen der Regelung der Zwischenkreisspannung entsprechen den oben bereits genannten Ausgestaltungen der Regelung der Umrichterausgangsspannung mit den oben ebenfalls bereits genannten Vorteilen.

Eine erfindungsgemäße Regelungsvorrichtung zur Regelung einer Antriebsvorrichtung gemäß dem erfindungsgemäßen Verfahren umfasst für jede Messgröße einen Messgeber zur Erfassung von Messwerten der Messgrößen, eine Auswerteeinheit zur Auswertung der erfassten Messwerte und einen Spannungsregler zur Regelung der Umrichterausgangsspannung in Abhängigkeit von den erfassten und ausgewerteten Messwerten.

Vorzugsweise ist dabei der Spannungsregler auch zur Regelung einer Zwischenkreisspannung eines Zwischenkreises zwischen einem Gleichrichter und einem Wechselrichter des Umrichters in Abhängigkeit von den erfassten und ausgewerteten Messwerten ausgebildet, sofern der Umrichter einen Zwischenkreis mit einer über einen Gleichrichter regelbaren Zwischenkreisspannung aufweist.

Eine derartig ausgebildete Regelungsvorrichtung ermöglicht die Realisierung des erfindungsgemäßen Verfahrens zur Regelung der Antriebsvorrichtung mit den oben genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Antriebsvorrichtung und eine Regelungsvorrichtung zur Regelung der Antriebsvorrichtung, und
- FIG 2: ein Ablaufdiagramm eines Verfahrens zur Regelung der Antriebsvorrichtung.

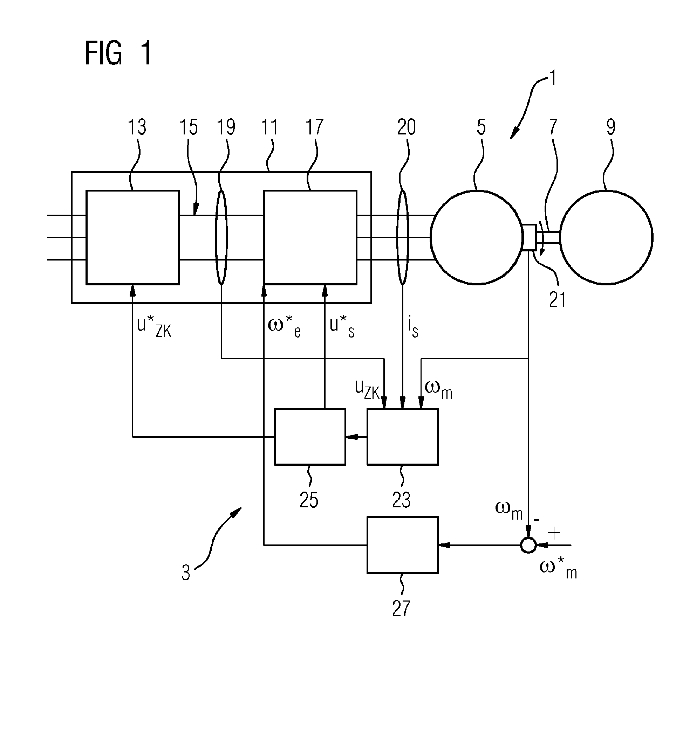

FIG 1 zeigt ein Blockdiagramm einer Antriebsvorrichtung 1 und einer Regelungsvorrichtung 3 zur Regelung der Antriebsvorrichtung 1.

Die Antriebsvorrichtung 1 umfasst einen Elektromotor 5 mit einer Motorwelle 7 zum Antrieb einer Last 9 und einen Umrichter 11 zur Energieversorgung des Elektromotors 5. Der Umrichter 11 umfasst einen Gleichrichter 13 und einen mit dem Gleichrichter 13 über einen Zwischenkreis 15 verbundenen Wechselrichter 17, wobei eine Zwischenkreisspannung u_{ZK} des Zwischenkreises 15 mittels des Gleichrichters 13 geregelt wird.

Die Regelungsvorrichtung 3 umfasst Messgeber 19 bis 21 zur Erfassung von Messwerten mehrerer Messgrößen, die eine Verlustleistung der Antriebsvorrichtung 1 charakterisieren, eine Auswerteeinheit 23 zur Auswertung der erfassten Messwerte und einen Spannungsregler 25 zur Regelung einer Umrichterausgangsspannung des Umrichters 11 und der Zwischenkreisspannung u_{ZK} in Abhängigkeit von den erfassten Messwerten. Als Verlustleistung der Antriebsvorrichtung 1 ist dabei eine Differenz einer elektrischen Eingangsleistung an einem Eingang des Umrichters 11 und einer mechanischen Motorleistung des Motors 5 definiert.

Als Messgrößen werden im dargestellten Ausführungsbeispiel die Zwischenkreisspannung u_{ZK}, ein Ausgangsstrom iₛ des Umrichters 11 und eine Motordrehzahl ωₘ der Motorwelle 21 verwendet. Die Regelungsvorrichtung 3 weist für jede dieser Messgrößen einen Messgeber 19 bis 21 auf, der die Messwerte der jeweiligen Messgröße erfasst und der Auswerteeinheit 23 zuführt.

Mittels der Auswerteeinheit 23 und des Spannungsreglers 25 werden die Umrichterausgangsspannung und die Zwischenkreisspannung u_{ZK} in Abhängigkeit von den erfassten Messwerten derart geregelt, dass die Verlustleistung der Antriebsvorrichtung 1 abnimmt. Dazu werden in unten näher beschriebener Weise von der Auswerteeinheit 23 in aufeinander folgenden Regelungszeitintervallen jeweils ein Ausgangsspannungssollwert u*ₛ der Umrichterausgangsspannung und ein Zwischenkreisspannungssollwert u*_{ZK} der Zwischenkreisspannung u_{ZK} in Abhängigkeit von den erfassten Messwerten aktualisiert. Mittels des Spannungsreglers 25 werden die Umrichterausgangsspannung auf den jeweils aktuellen Ausgangsspannungssollwert u*ₛ und die Zwischenkreisspannung u_{ZK} auf den jeweils aktuellen Zwischenkreisspannungssollwert u*_{ZK} geregelt.

Eine Regelung der Motordrehzahl ωₘ auf einen Drehzahlsollwert ω*ₘ erfolgt über einen entsprechenden Frequenzsollwert (ω*ₑ, auf den eine Ausgangsfrequenz der Umrichterausgangsspannung mittels eines Drehzahlreglers 27 geregelt wird.

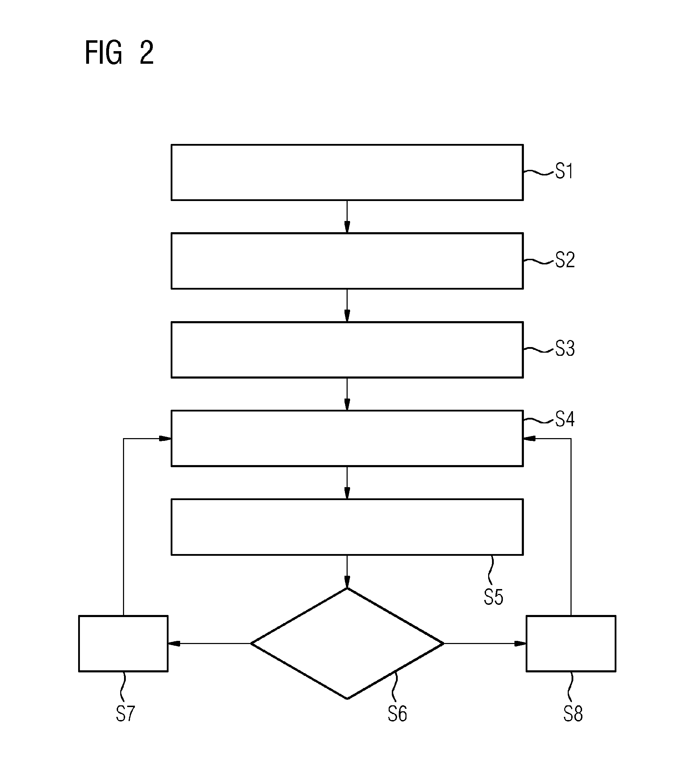

FIG 2 zeigt ein Ablaufdiagramm eines Verfahrens zur Regelung der Antriebsvorrichtung 1. Das Verfahren ist in FIG 2 in acht Verfahrensschritte S1 bis S8 aufgeteilt. Dabei werden drei Verfahrensschritte S1 bis S3 anfänglich in einem ersten Regelungszeitintervall ausgeführt und die anderen fünf Verfahrensschritte S4 bis S8 bilden eine Verfahrensschleife, die wiederholt in jeweils einem von aufeinander folgenden Regelungszeitintervallen ausgeführt wird.

In dem ersten Regelungszeitintervall werden in einem ersten Verfahrensschritt S1 zunächst mittels der Messgeber 19 bis 21 Messwerte der Messgrößen erfasst und der Auswerteeinheit 23 zugeführt. In einem zweiten Verfahrensschritt S2 wird aus den im ersten Verfahrensschritt S1 erfassten Messwerten mittels der Auswerteeinheit 23 eine Verlustleistung der Antriebsvorrichtung 1 ermittelt. In einem dritten Verfahrensschritt S3 werden der Ausgangsspannungssollwert u*ₛ und der Zwischenkreisspannungssollwert u*_{ZK} in einer vorgegebenen Änderungsrichtung, d.h. zu kleineren oder größeren Werten, um einen vorgegebenen Änderungsbetrag mittels der Auswerteeinheit 23 geändert und mittels des Spannungsreglers 25 werden die Umrichterausgangsspannung auf den geänderten Ausgangsspannungssollwert u*ₛ und die Zwischenkreisspannung u_{ZK} auf den geänderten Zwischenkreisspannungssollwert u*_{ZK} geregelt.

In den weiteren Regelungszeitintervallen werden jeweils zunächst in einem vierten Verfahrensschritt S4 wie in dem ersten Verfahrensschritt S1 mittels der Messgeber 19 bis 21 Messwerte der Messgrößen erfasst und der Auswerteeinheit 23 zugeführt. In einem fünften Verfahrensschritt S5 wird analog zu dem zweiten Verfahrensschritt S2 aus den im vierten Verfahrensschritt S4 erfassten Messwerten mittels der Auswerteeinheit 23 eine Verlustleistung der Antriebsvorrichtung 1 ermittelt. In einem sechsten Verfahrensschritt S6 wird mittels der Auswerteeinheit 23 geprüft, ob die in dem fünften Verfahrensschritt S5 ermittelte Verlustleistung gegenüber der in dem vorangegangenen Regelungszeitintervall ermittelten Verlustleistung abgenommen hat. Wenn das Ergebnis dieser Prüfung eine Abnahme der Verlustleistung ergibt, werden in einem siebten Verfahrensschritt S7 der Ausgangsspannungssollwert u*ₛ und der Zwischenkreisspannungssollwert u*_{ZK} in einer Änderungsrichtung geändert, die mit der Änderungsrichtung in dem vorangegangenen Regelungszeitintervall übereinstimmt. Andernfalls, d. h. wenn im sechsten Verfahrensschritt S6 keine Abnahme der Verlustleistung festgestellt wurde, werden in einem achten Verfahrensschritt S8 der Ausgangsspannungssollwert u*ₛ und der Zwischenkreisspannungssollwert u*_{ZK} in einer Änderungsrichtung geändert, die der Änderungsrichtung in dem vorangegangenen Regelungszeitintervall entgegengesetzt ist. Die Änderungen des Ausgangsspannungssollwerts u*ₛ und des Zwischenkreisspannungssollwerts u*_{ZK} in dem siebten Verfahrensschritt S7 und/oder achten Verfahrensschritt S8 erfolgen dabei beispielsweise jeweils um fest vorgegebene oder um von der in dem sechsten Verfahrensschritt S6 ermittelten Änderung der Verlustleistung abhängige Beträge. In dem siebten Verfahrensschritt S7 bzw. dem achten Verfahrensschritt S8 werden ferner mittels des Spannungsreglers 25 die Umrichterausgangsspannung auf den geänderten Ausgangsspannungssollwert u*ₛ und die Zwischenkreisspannung u_{ZK} auf den geänderten Zwischenkreisspannungssollwert u*_{ZK} geregelt. Die Verfahrensschleife mit den Verfahrensschritten S4 bis S8 wird wiederholt bis die Änderung der ermittelten Verlustleistung gegenüber der in dem vorhergehenden Regelungszeitintervall ermittelten Verlustleistung kleiner als ein vorgegebener Änderungswert ist oder die Umrichterausgangsspannung einen vorgegebenen Ausgangsspannungsmaximalwert oder einen vorgegebenen Ausgangsspannungsminimalwert erreicht oder die Zwischenkreisspannung u_{ZK} einen vorgegebenen Zwischenkreisspannungsmaximalwert oder einen vorgegebenen Zwischenkreisspannungsminimalwert erreicht.

Andere Ausführungsbeispiele des Verfahrens zur Regelung der Antriebsvorrichtung 1 sehen alternativ zu dem oben anhand von Figur 2 beschriebenen Ausführungsbeispiel vor, dass der Ausgangsspannungssollwert u*ₛ und der Zwischenkreisspannungssollwert u*_{ZK} in jedem Regelungszeitintervall entweder einer Lookup-Tabelle für den Ausgangsspannungssollwert u*ₛ und den Zwischenkreisspannungssollwert u*_{ZK} in Abhängigkeit von Werten der Messgrößen entnommen oder mittels eines mathematischen Modells zur Berechnung des Ausgangsspannungssollwerts u*ₛ und des Zwischenkreisspannungssollwerts u*_{ZK} in Abhängigkeit von Werten der Messgrößen berechnet werden.

In Fällen, in denen die Antriebsvorrichtung 1 einen Umrichter 11 aufweist, der keinen Zwischenkreis 15 aufweist (d.h. im Falle eines direkten Umrichters 11, der auch als Matrix-Konverter bezeichnet wird), oder einen einfach ausgebildeten Gleichrichter 11, der nicht zur Regelung der Zwischenkreisspannung u_{ZK} ausgebildet ist, aufweist, wird analog zu den oben beschriebenen Ausführungsbeispielen statt der Umrichterausgangsspannung und der Zwischenkreisspannung u_{ZK} nur die Umrichterausgangsspannung durch Änderung des Ausgangsspannungssollwert u*ₛ geregelt. Ferner ist es möglich, in Fällen, in denen die Antriebsvorrichtung 1 einen Umrichter 11 mit einer regelbaren Zwischenkreisspannung u_{ZK} aufweist, direkt lediglich die Zwischenkreisspannung u_{ZK} und darüber indirekt die Umrichterausgangsspannung zu regeln.

Ferner können die oben beschriebenen Ausführungsbeispiele dahingehend abgewandelt werden, dass alternativ oder zusätzlich andere bzw. weitere Messgrößen, die eine Verlustleistung der Antriebsvorrichtung 1 charakterisieren, erfasst und ausgewertet werden, beispielsweise eine Eingangsspannung und/oder ein Eingangsstrom des Umrichters 11 und/oder ein Zwischenkreisstrom des Zwischenkreises 15 und/oder ein Drehmoment an der Motorwelle 7.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Regelung einer Antriebsvorrichtung (1), die einen Elektromotor (5) mit einer Motorwelle (7) und einen Umrichter (11) zur Energieversorgung des Elektromotors (5) aufweist, wobei
- Messwerte von Messgrößen, die eine Verlustleistung der Antriebsvorrichtung (1) charakterisieren, erfasst werden
- und eine Umrichterausgangsspannung des Umrichters (11) in Abhängigkeit von den erfassten Messwerten derart geregelt wird, dass die Verlustleistung abnimmt.

2. Verfahren nach Anspruch 1, **dadurch gekennzeichnet, dass** als eine Messgröße eine Motordrehzahl (ωₘ) der Motorwelle (7) verwendet wird.

3. Verfahren nach einem der vorhergehenden Ansprüche, **dadurch gekennzeichnet, dass** als eine Messgröße ein Ausgangsstrom (iₛ) des Umrichters (11) verwendet wird.

4. Verfahren nach einem der vorhergehenden Ansprüche, wobei der Umrichter (11) einen Gleichrichter (13) und einen mit dem Gleichrichter (13) über einen Zwischenkreis (15) verbundenen Wechselrichter (17) aufweist, **dadurch gekennzeichnet, dass** als eine Messgröße eine Zwischenkreisspannung (u_{ZK}) des Zwischenkreises (15) verwendet wird.

5. Verfahren nach einem der vorhergehenden Ansprüche, **dadurch gekennzeichnet, dass** als eine Messgröße eine Eingangsspannung des Umrichters (11) verwendet wird.

6. Verfahren nach einem der vorhergehenden Ansprüche, **dadurch gekennzeichnet, dass** als eine Messgröße ein Eingangsstrom des Umrichters (11) verwendet wird.

7. Verfahren nach einem der vorhergehenden Ansprüche, **dadurch gekennzeichnet, dass** in aufeinander folgenden Regelungszeitintervallen jeweils ein Ausgangsspannungssollwert (u*ₛ) der Umrichterausgangsspannung in Abhängigkeit von den erfassten Messwerten ermittelt wird und die Umrichterausgangsspannung auf den ermittelten Ausgangsspannungssollwert (u*ₛ) geregelt wird.

8. Verfahren nach Anspruch 7, **dadurch gekennzeichnet, dass** der Ausgangsspannungssollwert (u*ₛ)
- entweder einer Lookup-Tabelle für den Ausgangsspannungssollwert (u*ₛ) in Abhängigkeit von Werten der Messgrößen entnommen wird
- oder mittels eines mathematischen Modells zur Berechnung des Ausgangsspannungssollwerts (u*ₛ) in Abhängigkeit von Werten der Messgrößen berechnet wird
- oder in Abhängigkeit von den erfassten Messwerten schrittweise geändert wird bis eine Änderung der Verlustleistung gegenüber der Verlustleistung in dem vorhergehenden Regelungszeitintervall kleiner als ein vorgegebener Änderungswert ist oder die Umrichterausgangsspannung einen vorgegebenen Ausgangsspannungsmaximalwert oder einen vorgegebenen Ausgangsspannungsminimalwert erreicht, wobei in jedem Regelungszeitintervall Messwerte erfasst werden und aus den jeweils erfassten Messwerten eine Verlustleistung ermittelt wird und eine Änderungsrichtung der Änderung des Ausgangsspannungssollwerts (u*ₛ) gegenüber der Änderungsrichtung in dem vorhergehenden Regelungszeitintervall geändert wird, falls die ermittelte Verlustleistung gegenüber einer in dem vorhergehenden Regelungszeitintervall ermittelten Verlustleistung zunimmt, und beibehalten wird, falls die ermittelte Verlustleistung gegenüber einer in dem vorhergehenden Regelungszeitintervall ermittelten Verlustleistung abnimmt.

9. Verfahren nach einem der vorhergehenden Ansprüche, wobei der Umrichter (11) einen Gleichrichter (13) und einen mit dem Gleichrichter (13) über einen Zwischenkreis (15) verbundenen Wechselrichter (17) aufweist und eine Zwischenkreisspannung (u_{ZK}) des Zwischenkreises (15) mittels des Gleichrichters (13) geregelt wird, **dadurch gekennzeichnet, dass** zusätzlich zur Umrichterausgangsspannung die Zwischenkreisspannung (u_{ZK}) in Abhängigkeit von den erfassten Messwerten derart geregelt wird, dass die Verlustleistung abnimmt.

10. Verfahren nach Anspruch 9, **dadurch gekennzeichnet, dass** in aufeinander folgenden Regelungszeitintervallen jeweils ein Zwischenkreisspannungssollwert (u*_{ZK}) der Zwischenkreisspannung (u_{ZK}) in Abhängigkeit von den erfassten Messwerten ermittelt wird und die Zwischenkreisspannung (u_{ZK}) auf den ermittelten Zwischenkreisspannungssollwert (u*_{ZK}) geregelt wird.

11. Verfahren nach Anspruch 10, **dadurch gekennzeichnet, dass** der Zwischenkreisspannungssollwert (u*_{ZK})
- entweder einer Lookup-Tabelle für den Zwischenkreisspannungssollwert (u*_{ZK}) in Abhängigkeit von Werten der Messgrößen entnommen wird
- oder mittels eines mathematischen Modells zur Berechnung des Zwischenkreisspannungssollwerts (u*_{ZK}) in Abhängigkeit von Werten der Messgrößen berechnet wird
- oder in Abhängigkeit von den erfassten Messwerten schrittweise geändert wird bis eine Änderung der Verlustleistung gegenüber der Verlustleistung in dem vorhergehenden Regelungszeitintervall kleiner als ein vorgegebener Änderungswert ist oder die Zwischenkreisspannung (u_{ZK}) einen vorgegebenen Zwischenkreisspannungsmaximalwert oder einen vorgegebenen Zwischenkreisspannungsminimalwert erreicht, wobei in jedem Regelungszeitintervall Messwerte erfasst und aus den jeweils erfassten Messwerten eine Verlustleistung ermittelt wird und eine Änderungsrichtung der Änderung des Zwischenkreisspannungssollwerts (u*_{ZK}) gegenüber der Änderungsrichtung in dem vorhergehenden Regelungszeitintervall geändert wird, falls die ermittelte Verlustleistung gegenüber einer in dem vorhergehenden Regelungszeitintervall ermittelten Verlustleistung zunimmt, und beibehalten wird, falls die ermittelte Verlustleistung gegenüber einer in dem vorhergehenden Regelungszeitintervall ermittelten Verlustleistung abnimmt.

12. Regelungsvorrichtung (3) zur Regelung einer Antriebsvorrichtung (1) gemäß einem Verfahren nach einem der vorhergehenden Ansprüche, die Regelungsvorrichtung (3) umfassend
- für jede Messgröße einen Messgeber (19 bis 21) zur Erfassung von Messwerten der Messgröße,
- eine Auswerteeinheit (23) zur Auswertung der erfassten Messwerte
- und einen Spannungsregler (25) zur Regelung der Umrichterausgangsspannung in Abhängigkeit von den erfassten und ausgewerteten Messwerten.

13. Regelungsvorrichtung (3) nach Anspruch 12, **dadurch gekennzeichnet, dass** der Spannungsregler (25) auch zur Regelung einer Zwischenkreisspannung (u_{ZK}) eines Zwischenkreises (15) zwischen einem Gleichrichter (13) und einem Wechselrichter (17) des Umrichters (11) in Abhängigkeit von den erfassten und ausgewerteten Messwerten ausgebildet ist.
